# EUROPÄISCHE PATENTSCHRIFT

(11) **EP 0 483 657 B1**
(45) Veröffentlichungstag und Bekanntmachung des Hinweises auf die Patenterteilung: **22.03.1995**
(21) Anmeldenummer: 91118058.6
(22) Anmeldetag: 23.10.1991
(51) Int. Cl.: C06C 5/08, C06C 5/04, B29C 63/42

(54) **Verfahren zum Herstellen einer ummantelten Sprengschnur**
Process for fabrication a sheathed detonating cord
Procédé de fabrication d'un cordeau détonant gainé

(30) Priorität: 27.10.1990 DE 4034264; 24.09.1991 DE 4131711
(43) Veröffentlichungstag der Anmeldung: 06.05.1992
(73) Patentinhaber: Dynamit Nobel Aktiengesellschaft, 53839 Troisdorf (DE)
(72) Erfinder: Kannengiesser, Werner, W-5210 Troisdorf (DE); Biermanns, Franz-Josef, Dr., W-5210 Troisdorf (DE); Lülsdorf, Karl-Heinz, W-5210 Troisdorf-Spich (DE); Heidbüchel, Hans-Heinz, Dr., W-5000 Köln 41 (DE)

(56) Entgegenhaltungen:
- DE-A- 2 021 702
- FR-A- 2 159 724
- GB-A- 2 204 932
- US-A- 2 685 813
- US-A- 3 712 222
- US-A- 3 968 724
- US-A- 4 913 053

## Beschreibung

Die Erfindung betrifft ein Verfahren der im Oberbegriff des Patentanspruchs 1 angegebenen Art.

Aus DE-GM 70 03 114 ist eine Sprengschnur bekannt, die gegen erhöhte Temperaturen und Drücke resistent ist. Derartige Sprengschnüre sind beispielsweise für seismische Messungen erforderlich, bei denen die Bohrlochtiefe mehr als 4000 m betragen kann, bei Gesteinstemperaturen zwischen 130° und 200° C und bei Drücken bis zu 1500 bar. Die bekannte Sprengschnur besteht aus einer Rohschnur aus einer umwickelten bzw. umsponnenen Sprengstoffseele und einem Dichtungsmantel. Für den Dichtungsmantel werden Folienbänder aus temperatur- und druckbeständigem Material benutzt. Der Dichtungsmantel ist seinerseits noch mit weiteren Fäden umsponnen. Das Umwickeln der Rohschnur mit Folienbändern ist ein aufwendiges und teures Verfahren und es birgt die Gefahr von Undichtigkeiten in sich. Daher ist zusätzlich zu dem Dichtungsmantel noch ein Außenmantel aus einer im Tauchverfahren aufgebrachten Lösung erforderlich. Ein solcher Außenmantel kann aber wegen seiner geringen Schichtstärke und wegen ungleichmäßiger Schichtdicken nur eine begrenzte Schutzfunktion ausüben.

Ferner ist es bekannt, eine Sprengstoff enthaltende Rohschnur mit einer Ummantelung zu versehen, die durch Heißextrusion eines Kunststoffs, z. B. Polyäthylen, erzeugt wird. Die für das Heißextrudieren geeigneten Kunststoffe erfordern hohe Extrusionstemperaturen von etwa 200° C. Da die Rohschnur Sprengstoff enthält, entsteht beim Umhüllen dieser Rohschnur mit einem heißen Kunststoff, je nach Art des im Einzelfall zu verwendenden Sprengstoffs, ein erhebliches Sicherheitsrisiko, weil die Gefahr besteht, daß der Sprengstoff entzündet wird. Um dieser Gefahr zu begegnen, hat man die Ummantelung im Kaltextrusionsverfahren aufgebracht, wobei kaltextrudierbare Kunststoffe verwendet werden, die anschließend durch Trocknen aushärten. Das Ansetzen der hierfür benötigten Rohstoffmasse dauert mindestens drei Wochen und für das Aushärten der Ummantelung werden mindestens sechs weitere Wochen benötigt. Dieses außerordentlich lange Herstellungsverfahren ist mit erheblichen Kosten und einem großen Lageraufwand verbunden.

Aus der US-A-4,913,053 ist ein Verfahren zum Herstellen einer ummantelten Sprengschnur bekannt, bei welchem eine Sprengstoff enthaltende Rohschnur mit einem Kunststoffmantel umgeben wird und als Kunststoffmantel ein schrumpffähiger, insbesondere wärmeschrumpffähiger Schlauch verwendet wird.

Der Erfindung liegt die Aufgabe zugrunde, ein Verfahren der im Oberbegriff des Patentanspruchs 1 angegebenen Art derart zu gestalten, daß die Ummantelung kostengünstig, schnell und ohne ein größeres Sicherheitsrisiko auf die Rohschnur aufgebracht werden kann.

Die Lösung dieser Aufgabe erfolgt erfindungsgemäß mit den im Patentanspruch 1 angegebenen Merkmalen, d.h. daß ein Gas, z.B. Luft, durch den Schlauch geblasen und die Rohschnur dabei nach dem Injektorprinzip mitgenommen wird. Sprengschnüre können eine Länge von mehreren Metern, z.B. 20 Metern, haben. Das Einführen der Rohschnur in den Schlauch erfolgt dann durch das Einblasen von Luft. Nach dem Einbringen kann natürlich noch eine Positionierung durch Nachschieben von Hand erfolgen.

Bei dem erfindungsgemäßen Verfahren wird als Kunststoffmantel ein schrumpffähiger gereckter Schlauch verwendet, der auf die Rohschnur aufgeschrumpft wird. Der Schrumpfvorgang kann z.B. durch Kontakt mit Luft erfolgen. Das dazu erforderliche Kunststoffmaterial ist vakuum- bzw. luftdicht verpackt. Beim Öffnen der Verpackung setzt der Schrumpfvorgang ein. Insbesondere erfolgt das Schrumpfen jedoch unter Wärmeeinwirkung. Hierbei wird der Schlauch vorteilhafterweise mit der darin befindlichen Rohschnur zum Schrumpfen durch einen Heizkanal geführt. Zweckmäßigerweise reduziert sich der Schlauchdurchmesser beim Schrumpfen auf etwa die Hälfte. Ein für den Schlauch geeignetes schrumpffähiges Polymer ist insbesondere schrumpffähiges vernetztes Polyäthylen. Anwendbar sind aber auch andere schrumpffähige Polymere, wie z.B. vernetzte "Neoprene" oder "Viton". Bevorzugt werden strahlungsvernetzte Polymere angewandt. Zwar wird für den Schrumpfvorgang insbesondere Wärme eingesetzt, jedoch sind die hierfür erforderlichen Temperaturen nicht so hoch, daß sie ernsthaft die Gefahr der Entzündung des Sprengstoffs hervorrufen würden.

Das erfindungsgemäße Verfahren eignet sich insbesondere zur Herstellung solcher Sprengschnüre, die eine hohe Temperaturbeständigkeit und Druckbeständigkeit aufweisen müssen, um beispielsweise die Forderung nach einer Temperaturbeständigkeit von 180° C und einer Druckbeständigkeit von 1 000 bar über einen Zeitraum von wenigstens 2 h einwandfrei zu erfüllen. Eine Ummantelung aus PVC wäre für eine derartige Sprengschnur nicht geeignet, da PVC bereits bei etwa 100° C weich wird. Natürlich muß bei einer Sprengschnur mit den geforderten Eigenschaften auch die Rohschnur so beschaffen sein, daß sie gegen Druck und Temperatur in dem jeweils geforderten Maß beständig ist.

Das erfindungsgemäße Verfahren hat den Vorteil geringer Prozeßtemperaturen, die für die Sicherheit unbedenklich sind. Es benötigt keine langen Ansetz- und Aushärtezeiten.

Im folgenden wird das erfindungsgemäße Verfahren unter Bezugnahme auf die Zeichnungen näher erläutert.

Es zeigen in schematischer Darstellung und in unterschiedlichem Maßstab
- Fig. 1: einen Längsschnitt der Situation während des Aufschrumpfens des Schlauchs auf die in der Ansicht gezeigte Rohschnur,
- Fig. 2: zur Verdeutlichung der Abmessungen einen Schnitt entlang der Linie II-II von Fig. 1,
- Fig. 3: einen Ausschnitt aus einer Vorrichtung zum Einführen der Rohschnur in den Schlauch und
- Fig. 4: den Heizkanal mit Zusatzeinrichtungen zum Aufschrumpfen des Schlauches.

Nach den Zeichnungen wird eine Rohschnur 10, die Sprengstoff enthält und mit einer oder mehreren Decklagen umwickelt oder umhüllt ist, mit einer Ummantelung 11 versehen, die die Rohschnur 10 fest umspannt. Die Rohschnur 10 enthält beispielsweise einen Sprengstoff, der bis etwa 180° C und bis zu einem Druck von etwa 1 000 bar beständig ist. Ein solcher Sprengstoff ist z.B. Oktogen.

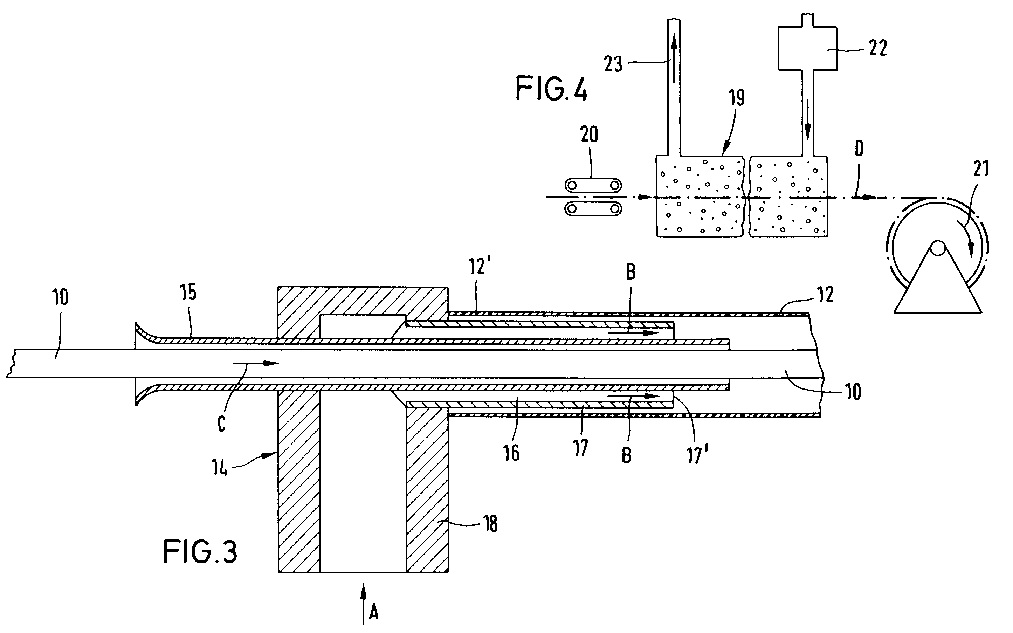

Für die Ummantelung wird ein wärmeschrumpffähiger vorgereckter und durch Strahlungsvernetzung stabilisierter Schlauch 12 benutzt, dessen Innendurchmesser größer, vorzugsweise wesentlich größer, ist als der Durchmesser der Rohschnur 10. Dieser Schlauch 12 wird auf die gleiche Länge geschnitten wie die Rohschnur 10, z.B. auf 20 m Länge. Dann wird - wie bei Fig. 3 näher erläutert - Luft oder ein anderes Gas in den Schlauch 12 eingeblasen und gleichzeitig wird die Rohschnur 10 in den Schlauch 12 eingeführt. Mit dem durch den Schlauch 12 strömenden Gas wird die Rohschnur 10 mitgenommen.

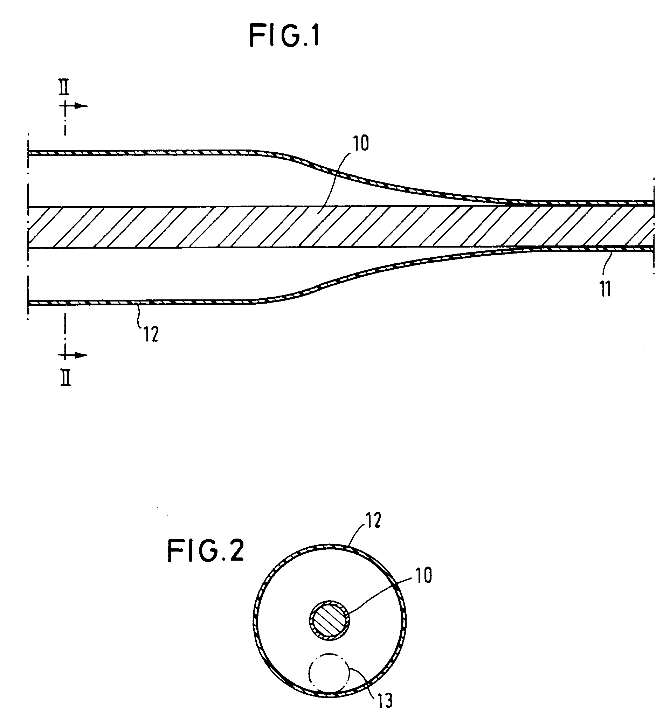

In Fig. 1 ist dabei zur Vereinfachung der zeichnerischen Darstellung die Rohschnur 10 koaxial angeordnet im Schlauch 12 gezeigt, während sie in der Realität im unteren Bereich des Schlauches 12 an dessen Innenwandung anliegt, wie es in Fig. 2 durch den strichpunktierten Kreis 13 angedeutet ist.

Bei der in Fig. 3 im Schnitt gezeigten Injektorvorrichtung 14 wird die in der Ansicht gezeigte Rohschnur 10 durch das Zuführrohr 15 hindurchgeführt. Dieses ist unter Ausbildung eines Ringspalts 16 von dem Luftleitrohr 17 umgeben. Beide Rohre 15, 17 sind koaxial zueinander angeordnet im Gehäuse 18 gehalten. Das stutzenförmige Luftleitrohr 17 dient gleichzeitig zur Aufnahme des einen Endes 12' des Schrumpfschlauches 12, wobei das über den Stutzen geschobene Schlauchende ggf. noch von Hand angedrückt wird. Wird dem Gehäuse 18 unter Druck Luft entsprechend dem Pfeil A zugeführt, so strömt diese - wie durch die Pfeile B angedeutet - mit entsprechend erhöhter Geschwindigkeit durch den Ringspalt 16 und tritt am Ende 17' aus dem Luftleitrohr 17 aus und damit in den Schlauch 12 ein, wobei sie nach dem Injektorprinzip die Rohschnur 10 gemäß dem Pfeil C mitnimmt. Die Rohschnur 10 wird dabei sozusagen auf einem Luftkissen transportiert und in den Schlauch 12 eingezogen. Der Durchmesser der Rohschnur kann dabei bis zu etwa 20 mm betragen.

Wenn auf die beschriebene Weise die Rohschnur 10 in dem Schlauch 12 positioniert wurde, erfolgt das thermische Schrumpfen des zuvor gereckten Schlauchs z. B. mit Hilfe eines ringförmigen Heißluftgebläses, durch das der Schlauch 12 zusammen mit der Rohschnur 10 hindurchgeführt bzw. umgekehrt, dieses darüber hinweggeführt wird. Bevorzugt erfolgt das Schrumpfen jedoch mittels eines Heizkanals 19, der in Fig. 4 schematisch gezeigt ist. Er hat in der Praxis eine Länge von etwa 5 m und wird auf eine Temperatur von ca. 150°C temperiert. Durch den Heizkanal wird der Schlauch 12 mit der darin liegenden Rohschnur 10 entsprechend dem Pfeil D mit einer Geschwindigkeit von 1 m/min hindurchgeführt. Dies geschieht in der Weise, daß die Zuführung über einen Bandzulauf 20 und die Aufwicklung über einen Abzug 21 vorgenommen werden. Zulauf und Abzug sind so aufeinander abgestimmt, daß die Schnur 10, 12 im Heizkanal 19 gespannt ist. Die Temperierung des Heizkanals 19 erfolgt mittels Heißluft, die mittels des Heißluftgebläses 22 zu- und über die Leitung 23 abgeleitet wird. Dabei schrumpft der Schlauch 12, wobei er sich unter Bildung der Ummantelung 11 fest und dicht an die Kontur der Rohschnur 10 anlegt und diese abdichtend umschließt. Das Maß der Verringerung des Durchmessers des Schlauchs 12 beim Schrumpfen sollte zwischen 1 mm und 6 mm liegen.

Die Schrumpftemperaturen sind abhängig von der Art des verwendeten gereckten und vorzugsweise auch vernetzten Polymers sowie der Temperaturbeständigkeit des Sprengstoffs in der Rohschnur 12. Sie betragen beispielsweise für Polyäthylen etwa 140 bis 300°C, für Neopren etwa 175 bis 300°C und für Viton etwa 130 bis 150°C.

Der Schlauch 12 besteht vorzugsweise aus strahlungsvernetztem gerecktem Polyäthylen. Bei einem bevorzugten Ausführungsbeispiel beträgt bei einer Rohschnur 10 mit einem Außendurchmesser von 4.9 mm der Außendurchmesser des Schlauchs 12 vor dem Schrumpfen 6,5 mm, nach dem Schrumpfen 5,4 mm. Die Wandstärke des Schlauchs 12 beträgt 0,25 mm. Mit einer Rohschnur 10 auf Basis von Oktogen hat diese Sprengschnur eine Temperatur- und Druckbeständigkeit von 180 °C und 1 000 bar bzw. 175 °C und 1 400 bar über einen Zeitraum von wenigstens 2 h.

## Patentansprüche

1. Verfahren zum Herstellen einer ummantelten Sprengschnur, bei welchem eine Sprengstoff enthaltende Rohschnur (10) mit einem Kunststoffmantel (11) umgeben wird, und als Kunststoffmantel ein schrumpffähiger, insbesondere wärmeschrumpffähiger, Schlauch (12) verwendet wird, der auf die Rohschnur (10) aufgeschrumpft wird, **dadurch gekennzeichnet**, daß die Rohschnur (10) dadurch in den Schlauch (12) eingeführt wird, daß ein Gas durch den Schlauch (12) geblasen und die Rohschnur (10) davon mitgenommen wird.

2. Verfahren nach Anspruch 1, **dadurch gekennzeichnet**, daß der Schlauch (12) mit der darin befindlichen Rohschnur (10) zum Schrumpfen durch einen Heizkanal geführt wird.

3. Verfahren nach Anspruch 1 oder 2, **dadurch gekennzeichnet**, daß der Schlauch (12) aus vernetzten Polymeren, insbesondere Polyäthylen, besteht.

4. Verfahren nach einem der Ansprüche 1 bis 3, **dadurch gekennzeichnet**, daß der Schlauchdurchmesser beim Schrumpfen auf etwa die Hälfte reduziert wird.

## Claims

1. Method for producing a sheathed explosive lead, whereby a bare lead (10) containing explosive is surrounded by a plastics sheath (11), with a shrinkable, in particular heat-shrinkable tube (12), which is shrunk on to the bare lead (10), being used as the plastics sheath, characterized in that the bare lead (10) is inserted into the tube (12) by being carried along by a gas which is blown through the tube (12).

2. Method according to Claim 1, characterized in that the tube (12), together with the bare lead (10) inside it, is passed through a heating channel for the purpose of shrinkage.

3. Method according to Claim 1 or 2, characterized in that the tube (12) is composed of cross-linked polymers, particularly polyethylene.

4. Method according to any one of Claims 1 to 3, characterized in that during shrinkage the diameter of the tube is reduced by approximately half.

## Revendications

1. Procédé de fabrication d'un cordeau détonant gainé, suivant lequel on entoure un cordeau brut (10) contenant de l'explosif à l'aide d'une enveloppe de matière plastique (11), et on utilise comme enveloppe de matière plastique une gaine (12) rétractable, en particulier thermo-rétractable, qui est rétractée sur le cordeau brut (10), **caractérisé** par le fait qu'on introduit le cordeau brut (10) dans la gaine (12) en soufflant un gaz à travers la gaine (12), le cordeau brut (10) étant entraîné par le gaz.

2. Procédé suivant revendication 1, **caractérisé** par le fait qu'on fait passer la gaine (12) avec le cordeau brut (10) qui s'y trouve, à travers un canal chauffé en vue de la rétraction.

3. Procédé suivant revendication 1 ou 2, **caractérisé** par le fait qu'on utilise une gaine (12) constituée par un polymère réticulé, en particulier du polyéthylène.

4. Procédé suivant l'une des revendications 1 à 3, **caractérisé** par le fait qu'on réduit le diamètre de la gaine à peu près de moitié lors de la rétraction.
